# EUROPÄISCHE PATENTANMELDUNG

(11) **EP 1 473 506 A1**
(43) Veröffentlichungstag der Anmeldung: **03.11.2004**
(21) Anmeldenummer: 04010078.6
(22) Anmeldetag: 28.04.2004
(51) Int. Cl.: F16L 59/20, F16L 59/16

(54) **Verfahren zum Abisolieren von isolierten Stahlrohren**

(30) Priorität: 02.05.2003 DE 10319963; 22.06.2003 DE 10328150
(71) Anmelder: Stucke, Walter, 40878 Ratingen (DE)
(72) Erfinder: Stucke, Walter, 40878 Ratingen (DE)
(74) Vertreter: Kaewert, Klaus

(57) **Zusammenfassung**

Nach der Erfindung wird beim Abisolieren von kunststoffisolierten Rohren wahlweise ein EP-Übergangsbereich stehen gelassen wird und/oder Rohrenden ganz oder teilweise abisoliert wird und/oder für die Herstellung von Abzweigungen neben einem Umfangsschnitt ein Axialschnitt durchgerührt wird.

## Beschreibung

Die Erfindung betrifft ein Verfahren zum Abisolieren von mehrschichtig isolierten Stahlrohren, insbesondere von Stahlrohren für die Erdgasleitungen.
Bei Erdgasleitungen wird eine Standzeit von mehreren Jahrzehnten verlangt. Deshalb ist ein zuverlässiger Korrosionsschutz an den Stahlrohren erforderlich.
Als Korrosionsschutz hat sich vor allem ein Mehrschichtenschutz bewährt, wie er in der DE-C-3247 512 beschrieben ist. Dabei wird auf die gereinigte Stahlrohroberfläche zunächst eine Epoxyharzschicht (EP-Schicht) aufgebracht. Die EP-Schicht dient als Haftvermittler für einen Kleber bzw. für eine Polyäthylenschicht (PE-Schicht) . Die EP-Schicht hat in der bekannten Form eine Dicke von 0,03 bis 0,15 mm
Der Kleber ist vorzugsweise ein PE-Copolymerisat.
PE ist eine thermoplastischer Kunststoff.
Die PE-Schicht wird nach der DE-C-3247512 als extrudierter Doppelschlauch aufgebracht. Es gibt auch noch andere Verfahren zum Aufbringen der PE-Schicht. Zum Beispiel durch Wicklung. Das Wicklungsverfahren findet vor allem bei Großrohren Anwendung.
Es ist auch das Aufschmelzen von PE-Pulver bekannt.
Die Dicke der PE-Schicht beträgt in der bekannten Form in der Regel 1,8 bis 4 mm.

Die Stahlrohre können in großen Längen und mit bestimmten Verfahren endlos hergestellt werden.
Die Stahlrohre werden wahlweise auch in den großen Längen isoliert bzw. endlos isoliert.
Die Stahlrohre werden aber in Längen geliefert, die aus Transportgründen sehr begrenzt sind und an der Baustelle wieder miteinander verschweißt werden.

Die bisherige Bauweise ist insofern unzulänglich, als sich an bisherigen Leitungen immer wieder und immer neue Mängel zeigen. Die Mängel beeinträchtigen nicht nur den Betrieb der Gasleitungen. Die Mängel beinhalten eine ernste Gefahr, nämlich die Gefahr einer Explosion durch austretendes Gas.
Der Erfindung liegt die Aufgabe zugrunde, die Gasleitungen zu verbesseren.

Die Erfindung setzt bei der Erkenntnis an, daß die Schweißverbindungen die Schwachstellen der Rohrleitungen sind.

Durch das Ablängen der bei der Herstellungen anfallenden langen bzw. endlosen Rohre entstehen Rohrstücke, die an den Enden für die Verbindung mit anderen Rohrstücken abisoliert werden müssen. Soweit das Abisolieren werksseitig erfolgt, können die Rohre "als werksseitig vorbereitet" bezeichnet werden

Die Rohre können aber auch nach dem Ablängen isoliert werden. Dabei kann an den Rohrenden ein Streifen frei bleiben, der für das anschließende Verschweißen ausreicht.

An der Baustelle werden die Stahlrohre zu einer Leitung aneinander gesetzt. Die Verbindung erfolgt durch Schweißen.

Darüber hinaus fallen in sehr großem Umfang Paßstücke an, die durch Ablängen vorhandener Rohre gewonnen werden. Die Paßstücke werden an der Baustelle gefertigt bzw. abgelängt und an der jeweiligen Rohrleitungsstelle in die Rohrleitung eingeschweißt.

Soweit die Rohrenden nicht schon werksseitig für die Verbindung vorbereitet sind, müssen die Rohrenden zum Schweißen wieder abisoliert werden. Dabei kommen verschiedene Verfahrensweisen in Betracht, von denen einige üblich sind und von denen andere neu sind:

Es fehlt naturgemäß eine Vorbereitung der Rohrenden, wenn aus einer Rohrleitung ein Stück herausgeschnitten wird, um für eine Abzweigung ein T-Stück einzusetzen.

Ebenso fehlt es naturgemäß an einer Vorbereitung der Rohre, wenn an einer Abzweigung das Abzweigungsrohr unmittelbar an dem durchlaufenden Rohr angeschweißt wird oder wenn der Abzweigungsrohr vorn einen Flansch besitzt und mit dem Flansch an dem durchlaufenden Rohr verschweißt wird.
In allen diesen Fällen müssen Rohrenden bzw. Rohrflächen abisoliert werden, um eine Verschweißung vorzunehmen.

Nach dem Schweißen wird die Schweißstelle gereinigt. Anschließend wird zwischen dem Ende der Isolierung an dem einen Rohrende und dem Ende der Isolierung an dem anderen Rohrende eine neue Isolierung angebracht. Die nachträgliche Isolierung wird als Nachisolierung bezeichnet. Es ist günstig, als Nachisolierung eine Schrumpfmuffe zu verwenden, die das Ende der Isolierung an dem einen Rohrende und das Ende der Isolierung an dem anderen Rohrende überlappend übergreift.

Zur Verbindung von Rohrstücken in Längsrichtung kann die Muffe auf eines der Rohrenden an einem Rohrstoß bzw. Schweißstoß aufgeschoben werden. Die Muffe ist dem T-Stück im wesentlichen nachgebildet. Sie hat einen Abgang für das Abzweigungsrohr und zwei Abgänge für die Rohrenden der Rohrleitung, in die das T-Stück eingesetzt werden soll.
Die Enden der Muffe, welche die Schweißstöße der Rohrenden mit dem T-Stück überlappen sollen, werden zur Montage eines T-Stückes so weit zurückgezogen, daß sich das T-Stück in die vorher ausgeschnittene Stelle der Rohrleitung schieben läßt und daß anschließend die Verschweißung des T-Stückes in der Rohrleitung ohne Beschädigung der Muffe erfolgen kann. Nach dem Schweißen kann die Schweißstelle gereinigt werden und die Schrumpfmuffe anschließend über die Schweißstelle gezogen werden. Der Schrumpf der Schrumpfmuffe setzt nach entsprechender Erwärmung ein.

Es kann auch mit anderen Schrumpfmuffen gearbeitet werden, die nach einem älteren Verschlag so aufgespreizt werden, daß die Schweißverbindung des T-Stückes mit der Rohrleitung in der Schrumpfmuffe hergestellt werden kann.

Die Abzweigungsleitung kann auch unmittelbar in die durchgehende Rohrleitung geschweißt werden. Das ist besonders für Abzweigungsleitungen kleineren Durchmessers relevant.
Dabei kommen unterschiedliche Verfahrensweise in Betracht.
Es kann in die durchgehende Rohrleitung ein Loch eingearbeitet werden, welches im wesentlichen dem Innendurchmesser der Abmveigungsleitung entspricht, und es kann die Ahzweigungsleitung so eingepaßt werden, daß der Mantel der Abzweigungsleitung den Lochrand trifft. An der Baustelle werden solche Konturen durch Brennschneiden erzeugt. Im Werk bietet sich als Alternative ein Konturfräsen an.

Die Abzweigungsleitung kann auch mittelbar über einen Flansch an die durchgehende Rohrleitung angeschweißt werden. Auch das ist besonders für Abzweigungsleitungen kleineren Durchmessers relevant. Vorzugsweise ist der Flansch dem Rohrdurchmesser angepaßt. Das heißt der Flansch ist wie die Wandung/Rohrmantel der durchgehenden Rohrleitung gewölbt. Besonders einfach läßt sich die Wölbung mit einem Blech herstellten. Infolge der Wölbung liegt der Flansch an seinen Rändern mehr oder weniger schließend auf dem Mantel der durchgehenden Rohrleitung auf, wenn der Flansch in seine Stellung zum Verschweißen gebracht wird. Der Flansch ist an ein zusätzliches Teil. Seine Anwendung erscheint oberflächlich als Mehraufwand. Vorteilhafterweise kann der Flansch aber mit einem Rohrstück der Abzweigungsleitung werksseitig vorbereitet werden. Dort ist die Fertigung so rationalisiert, daß sich gegenüber der oben beschriebenen Einpassung der Abzweigungsleitung erhebliche Vorteile ergeben können.

Das Abisolieren ist in der Vergangenheit von jedem Leitungsbauer und Hersteller nach Belieben durchgeführt worden. Zum Abisolieren ist es üblich, die Isolierung zunächst umlaufend einzuschneiden und danach den zu entfernenden Teil der Isolierung in axialer Richtung zu durchschneiden, um diesen Teil der Isolierung abziehen zu können. Das Abziehen wird durch Erwärmung erleichtert. Dabei ist die übliche Wärmequelle eine Propangasflamme. Für die Handhabung der Propangasflamme gilt die Regel, daß die Flamme blau-gelb sein soll.

Bei den herkömmlichen Abisolierungs-Schnitten wird die Isolierung regelmäßig bis auf den Stahl des Stahlrohres durchschnitten.

Es hat sich jedoch gezeigt, daß sich an den herkömmlichen Schnitten leicht eine Unterrostung bildet. Die Unterrostung wird erkennbar, wenn die Rohre zunächst auf Lager genommen und erst nach einiger Zeit verwendet werden. Dann zeigt sich bereits nach wenigen Tagen oder Wochen eine schädliche Rostbildung.

Erst mit der EP 213061 B1 ist darauf hingewiesen worden, daß die Ursache für die Unterrostung in einem Einschneiden und Durchschneiden der EP-Schicht zu suchen ist.
Mit dieser Druckschrift ist zur Lösung des Schneidproblems ein Verfahren vorgeschlagen worden, bei dem die EP-Schicht unverletzt bleibt. Der Vorschlag geht davon aus, daß die EP-Schicht eine der Rauhtiefe des Rohres angepaßte Schichtdicke besitzt. Bezeichnet man die unter einem Mikroskop erkennbare Rauhtiefe als Stahlgebirge, dann soll die EP-Schicht das Stahlgebirge überdecken, aber auch nicht viel dicker sein.
Hinter dem Vorschlag steht die Erkenntnis, das die EP-Schicht in größeren Dicken in Abhängigkeit von der Temperatur und der Feuchtigkeit druckempfindlich reagieren, dagegen in kleineren Dicken nicht. In der Regel ist eine Schichtdicke von 0,04 bis 0,05 mm ausreichend.
Im weiteren wird davon ausgegangen, daß nur die erforderliche Schichtdicke auf den Rohren vorgesehen ist. Wenn gleichwohl darüber hinausgehende Schichtdicken vorkommen und die EP-Schicht beim Einschneiden unverletzt bleiben soll wird davon ausgegangen, daß die erforderliche Schichtdicke unverletzt bleibt.

Nach der EP 213061 B1 kommt eine besondere Distanzhaltung für das Schneidwerkzeug zur Anwendung. Das Schneidwerkzeug wird so geführt, daß ein Abstand von der Metallaußenfläche der Rohre gewahrt wird, der gleich der Dicke oder größer als die erforderliche Dicke der EP-Schicht ist.

Außerdem wird der Schnitt nicht als einfacher Trennschnitt mit einer gewöhnlichen Messerklinge durchgeführt, sondern als Schälvorgang, bei dem eine ringförmig um das Stahlrohr innerhalb der Kunststoffisolierung verlaufende V-förmige Nut oder eine ähnliche Nut erzeugt wird. Die Nut ist im Nuttiefsten vorzugsweise gerundet. Das führt dazu, daß die Schnittfläche an der auf dem Stahlrohr verbleibenden Isolierung abgeschrägt ist und im Tiefsten ausläuft. Durch den bekannten Schnitt entsteht eine böschungsartige Schnittfläche. Dadurch wird die Wirkung der in der Kunststoffisolierung eingefrorenen Textur nach dem Einschneiden wesentlich gemildert.
Günstig ist, wenn das Schneidwerkzeug eine der Form des Nut nachgebildete Schneidkante besitzt.

In dem Bereich (Schweißbereich), welcher der Schweißwärme ausgesetzt ist, wird vorzugsweise vor dem Schweißen auch die EP-Schicht entfernt, um eine unkontrollierte Verbrennung der EP-Schicht und nachteilige Verbrennungsrückstände zu vermeiden. Der Schweißbereich hat in Rohrlängsrichtung vorzugsweise eine Länge von 100 mm, wahlweise auch eine geringere Länge von z.B. 75 mm.
An den Schweißbereich schließt sich vorzugsweise ein Übergangsbereich zur Isolierung von 50 mm. Im Übergangsbereich bleibt die EP-Schicht in der notwendigen Dicke unverletzt. Der Übergangsbereich kann auch in Rohrlängsrichtung eine andere Länge besitzen, z.B. von 75 mm.
Die Entfernung der Isolierung wird im folgenden als Abisolierung bezeichnet.

Bei werksseitiger Vorbereitung der Rohrenden kann die Abisolierung besser kontrolliert werden.

Bei nachträglichem Abisolieren an der Baustelle ist die Qualität der Abisolierung häufig zu beanstanden.

Nach einem älteren, unveröffentlichten Vorschlag soll die EP-Schicht beim Abisolieren in einem Übergangsbereich stehen bleiben. Nach dem Schweißen und Reinigen der Schweißstelle soll der Zwischenraum zwischen dem Übergangsbereich an dem einen Rohrende und dem Übergangsbereich an dem anderen Rohrende mit EP oder einem anderen Haftvermittler beschichtet werden, so daß die Schrumpfmuffe oder eine andere Isolierungsaußenschicht eine innige Verbindung mit dem Haftvermittler eingehen kann.

Soweit von dem Übergangsbereich Gebrauch gemacht wird, hat der Übergangsbereich in axialer Richtung eine Länge von vorzugsweise mindestens 20mm, noch weiter bevorzugt mindestens 50 mm und höchst bevorzugt mindestens 70 mm.
Der Übergangsbereit kann an allen Schweißstellen vorkommen. Die Schweißstellen befinden sich am Stoß zwischen zwei Rohren und an Abzweigungen.

Im Übergangsbereich der EP-Schicht ist es beim Abisolieren der PE-Außenschicht von Vorteil ist, wenn die EP-Schicht dort auch beim Axialschnitt unverletzt bleibt.

Die PE-Isolierung wird von der EP-Schicht bzw. dem Kleber abgezogen. Die Trennung der PE-Schicht von der EP-Schicht bzw. der Kleberschicht ist ohne Beschädigung der EP-Schicht möglich, wenn der Widerstand der EP-Schicht gegen Abziehen größer als der Widerstand der PE-Schicht gegen Lösen von der EP-Schicht ist.

Nach der Erfindung wird das Abziehen durch eine Erwärmung der Isolierung unterstützt. Jedoch wird eine Erwärmung des PE auf mehr als 110 Grad Celsius, vorzugsweise auf mehr als 90 Grad Celsius vermieden. Vorzugsweise wird jedoch mindestens eine Temperatur von 50 Grad Celsius und noch weiter bevorzugt eine Temperatur von mindestens 70 Grad Celsius und höchst bevorzugt auf 80 Grad Celsius erreicht.

Desweiteren hat die Erfindung erkannt, daß die übliche Erwärmung von außen mit einer Propangasflamme eine Flammtemperatur verursacht, bei der eine extreme Gefahr übermäßiger Wärmebelastung des nicht abzuisolierenden Kunststoffes besteht.
Vorzugweise wird deshalb für die Erwärmung ein Heizmedium ohne offene Flamme verwendet. Wahlweise wird ein Heizmedium mit einer Temperatur verwendet, die höchstens 250 Grad Celsius oder höchstens 150 Grad Celsius beträgt oder sogar unterhalb der Schmelztemperatur von PE liegt. Je geringer die Temperatur ist, desto länger dauert es, bis die für das Abziehen der PE-Schicht gewünschte Erwärmung erreicht ist.

Wahlweise kann die Wärme dabei
von außen oder
von innen oder
von außen und innen zugeführt werden.

Die Zuführung von innen hat unter bestimmten Voraussetzungen den Vorteil, daß die Wärme nur eine sehr geringe Fließstrecke zurücklegen muß, um die gewünschte Trennstelle zwischen EP-Schicht und PE-Schicht zu erreichen. Die Fließstrecke hängt von der Dicke der Schichten ab. Während die PE-Schicht-Dicke mehrere Millimeter beträgt, hat die notwendige EP-Schicht nur eine Dicke eines Bruchteils eines Millimeters. Die EP-Schicht liegt allerdings an der Innenseite der Isolierung, so daß die Zuführung der Wärme von innen erfolgen muß, wenn der Vorteil der geringen Fließstrecke genutzt werden soll.
Bei gleichzeitiger Zuführung von Wärme von außen und von innen ergänzen sich die beiden Wärmeflüsse und reduziert sich die für gewünschte Erwärmung erforderliche Zeit.
Die Erwärmung von innen läßt sich an Rohrenden mit diversen Heizeinrichtungen darstellen. Als Heizeinrichtungen können für die Erwärmung von innen sogar die oben erwähnten Propangasbrenner Anwendung finden, wenn die Erwärmung von innen durch die Stahlrohre hindurch erfolgen soll. Anstelle der Propangasbrenner können innen ebenso andere Heizeinrichtung Anwendung finden. Das gilt sowohl für Heizstrahler als auch für Gasheizeinrichtungen wie Heißluftgeräte.
Besondere Heizbedingungen ergeben sich mit einem Induktionsheizgerät. Mit dem Induktionsheizgerät wird in dem Stahlrohr im Wege der Induktion ein Strom erzeugt, der zur Erwärmung des Rohres führt. Das Induktionsheizgeräte hat den Vorteil besonderer Genauigkeit bei der Wärmeerzeugung. Die Wärmeerzeugung wird über den Strom geregelt. Der Strom ist genau einstellbar.

Die Wärme breitet sich in alle Richtungen aus, auch in Richtung der EP-Schicht, so daß die EP-Schicht kurzfristig erwärmt.
Das Induktionsheizgerät kann innen im Rohr und außen am Rohr angeordnet sein. Die Anordnung des Gerätes außen bewirkt allerdings keine Änderung in der Richtung des Wärmeflusses. Die Wärme entsteht weiter in dem Stahlrohr und fließt vom Rohrinneren her in die EP-Schicht.

Für die Erwärmung von außen kommen verschiedene Medien in Betracht:
Geeignet sind besonders gasförmige Heizmedien.

Es können auch nicht brennbare Gase verwendet werden, die an einer Wärmequelle erwärmt werden. Desgleichen können brennbare Gase in gleicher Weise mittels einer anderen Wärmequelle erwärmt und als erfindungsgemäßes Heizmedium zum Einsatz kommen. Nach der Erfindung wird die Temperatur des Heizmediums dabei unterhalb der Zündtemperatur gehalten, so daß keine offene Flamme entstehen kann. Für die Temperaturregelung eignet sich eine Mischung mit Umgebungsluft.

Zur Erzeugung von Heißluft werden vorzugsweise Geräte eingesetzt, die elektrisch betriebene Heizspiralen und einen Lüfter besitzen. Der Lüfter saugt Umgebungsluft an, die an den Heizspiralen entlang geführt wird und sich an den Heizspiralen erwärmt.
Die Heißluftgeräte werden vorzugsweise in Umfangsrichtung hin- und hergehend bewegt, um zu verhindern, daß die Stromzuführungskabel sich um die Leitung wickeln.

Wahlweise wird die zu wärmende Leitungsfläche bzw. Rohrfläche eingehaust. Die Einhausung kann durch feste Gehäuseschalen gebildet werden, die auf die Erdgasleitung aufgesetzt und nach ausreichender Vorwärmung wieder entfernt werden. Als Einhausung eignen sich auch flexible Einrichtungen, z.B. warmfeste Textilien, die um die Erdgasleitung gespannt werden.

Durch die Einhausung reduziert sich der Energieaufwand einer Gasbeaufschlagung.
Zusätzlich ergibt sich der wesentliche Vorteil einer gleichmäßigen Erwärmung. Die Gleichmäßigkeit einer Erwärmung von Hand ist vor allem bei größeren Rohren ein zunehmendes Problem. Außerdem kann nach einer Einhausung mit geringen Mittel eine automatische Zuführung von Heißluft oder eine automatische Zuführung von anderen gasförmige Heizmitteln erreicht werden.
Bei Anwendung einer Einhausung der zu erwärmenden Leitungsfläche bzw. Rohrfläche läßt sich auch anstelle des gasförmigen Heizmittels ein flüssiges Heizmittel anwenden. Zu den einfachen flüssigen Heizmitteln gehört auch Heißwasser. Das Heißwasser hat bei atmosphärischem Druck zwar nur eine maximale Temperatur von 100 Grad Celsius. Das kann aber durch eine längere Heizdauer ausgeglichen werden.

Wahlweise kann als Heizmittel auch eine Heizmatte zur Anwendung gebracht werden, die um die Gasleitung geschlungen wird. Vorzugsweise wird dann eine elektrisch betriebene Heizmatte verwendet.

Von Vorteil ist eine Temperaturregelung bei der Erwärmung. Dabei können folgende Temperaturen gemessen werden:
Temperatur des Heizmittels
Temperatur der Isolierung an ausgewählter Stelle. Bei einer Erwärmung von außen ist befindet sich die ausgewählte Stelle für die Temperaturmessung an der Isolierung z.B. an der Außenfläche.
Die gewählte Temperaturmessung eröffnet zwei Möglichkeiten.
Erstens kann dadurch die Einhaltung der zulässigen Grenzen für die Erwärmung der Isolierung kontrolliert werden.
Zweitens kann der anhand der jeweiligen Temperatur ermittelt werden, wann sich an der Trennstelle die erfindungsgemäße Temperatur für das Abisolieren einstellt.
Die Ermittlung kann durch Rechnung oder durch Vergleich mit dem Verlauf von Referenzkurven für die Erwärmung erfolgen. Jede konkrete Isolierung hat bei einer anliegenden Außentemperatur einen bestimmten Temperaturverlauf in den weiteren Schichten. Der Temperaturverlauf wird als Referenzkurve bezeichnet.

Die Referenzkurven können als EDV-Dateien in eine EDV-Steuerung der erfindungsgemäß vorgesehenen Heizeinrichtungen aufgenommen werden.

Besonders günstige Voraussetzungen für eine erfindungsgemäße Regelung bieten elektrisch betriebene Heißluftgeräte. Bereits einfache Geräte sind mit einer Temperaturregelung ausgerüstet. In die Regelkreise lassen sich erfindungsgemäße Steuerungen ohne weiteres integrieren.

Spätestens nach dem Schweißen wird der vollständig abisolierte Bereich gestrahlt, vorzugsweise stahlgestrahlt. Beim Stahlstrahlen werden vorzugsweise feinkörnige Stahlpartikel gegen die zu reinigenden Flächen geschleudert. Die Stahlpartikel können dabei in verschiedener Weise in Bewegung gebracht werden. Eine vorteilhafte Mechanik wird durch Druckluft gebildet. Die Druckluft wird durch ein Strahlrohr geführt, auf dem oben ein Vorratsbehälter für die Stahlpartikel sitzt. Die Druckluft beschleunigt die Stahlpartikel, die aus dem Vorratsbehälter in das Strahlrohr dringen, auf die gewünschte Geschwindigkeit. Zugleich lenkt das Strahlrohr die Stahlpartikel gegen die zu reinigenden Flächen.
Auch die Schweißnaht wird zweckmäßigerweise gereinigt.
Vor Vorteil ist, die zu reinigenden Flächen einzuhausen, so daß die Stahlpartikel wieder eingefangen und dem Vorratsbehälter wieder zugeführt werden können. Die Einhausung entlastet auch die Umwelt.

Beim Stahlstrahlen wird eine gehobene Reinigungsqualität angestrebt. Maximale Reinigungsqualitäten sind in der Regel nicht erforderlich.

Auf die gereinigte Fläche wird eine neue EP-Schicht aufgetragen. Wahlweise geschieht das durch Aufschmelzen von EP-Pulver.

Bei der weiteren Handhabung ist zu unterscheiden zwischen der Verbindung zweier Rohr zu einer Rohrleitung und zwischen der Abzweigung von einer Rohrleitung.

Bei der Verbindung zweier Rohrenden zu einer Rohrleitung verläuft die Schweißstelle über den vollen Rohrumfang. Dementsprechend ist der gesamte Rohrumfang an der Schweißstelle abzuisolieren.

In Anwendung des vorgeschlagenen EP-Übergangsbereiches ergeben sich an den Rohrenden zwei Bereiche, nämlich ein Übergangsbereich und ein Bereich vollständiger Abisolierung. Im Übergangsbereich wird die Rohrisolierung bis auf die EP-Schicht entfernt.
Der zum Abisolieren vorgesehen Axialschnitt kann übergreifend für beide Bereiche (Übergangsbereich und Bereich vollständiger Abisolierung) erfolgen, ohne daß die Schnitt-Tiefe verändert wird, wenn die EP-Schicht zur vollständigen Abisolierung wie oben beschrieben gehandhabt wird.
Der Axialschnitt wird vorzugsweise im Gegensatz zu dem Umfangsschnitt nicht als Schälschnitt durchgeführt sondern ein möglichst schmaler Einschnitt. Das erleichtert den Schnitt. Es kann ein entsprechend schmales Messer zum Einsatz kommen

Der Axialschnitt wird vorzugsweise möglichst senkrecht zur Umfangsfläche der Rohre eingebracht. Die Richtung senkrecht zur Umfangsfläche beschreibt die radiale Richtung.
Es kommt aber auch ein Schnitt in Betracht, der schräg zur axialen Richtung verläuft. Dann ergibt sich zwar eine schräg verlaufende Schnittfläche. Mit dem schräg verlaufenden Schnitt ergibt sich an dem Schnitt ein Zipfel, der das Abziehen der PE-Schicht erleichtert.

Für die Axialschnitte können flache Schneidmesser verwendet werden.

Bei der Verbindung der Rohrleitung mit einer Abzweigung kann die Abisolierung unterschiedliche Formen annehmen. Die Formen hängen von der Art der Abzweigungen und von der Art der Herstellung der Abzweigungen ab.

Bei der oben erläuterten Abzweigung, bei der ein T-Stück Anwendung findet, ergeben sich Rohrenden, die wie andere Rohrenden abisoliert werden.

Bei der oben erläuterten Abzweigung, bei der ein Abzweigungsrohr in ein durchgehendes Rohr der Erdgasleitung eingepaßt wird, findet eine vollständige Abisolierung oder eine Teil-Abisolierung an der Abzweigung statt.

Bei vollständiger Abisolierung sind Schälschnitte in Umfangsrichtung über 360 Grad umlaufende Abisolierung an dem zur Rohrleitung gehörigen Rohr gewünscht oder zweckmäßig. Die vollständige Abisolierung kommt bei größeren Abzweigungen vor. Kann aber auch für kleinere Abzweigungen sinnvoll sein.

Nach einem älteren Vorschlag erfolgt an der Abzweigung die Nachisolierung mit einer Muffe, die zugleich die Rohrleitung an der betreffenden Stelle und auch die abzweigende Leitung umfaßt. Dabei kann die Anwendung eines EP-Übergangsbereiches wieder von Vorteil sein und wird der dazwischen liegende und dem Schweißvorgang ausgesetzte Bereich vollständig abisoliert und nach dem Schweißen und Reinigen vorzugsweise wieder mit EP beschichtet.

Beim Abisolieren an Abzweigungen ohne EP-Übergangsbereich wird aus der Isolierung ein für den Anschluß der Abzweigung erforderlicher Bereich ausgeschnitten. Die Abmessungen des Ausschnittes ergeben sich aus dem notwendigen Abstand des Kunststoffes von den Schweißflächen des Anschlußflansches am Rohr der Abzweigung. Der Abstand ist abhängig von dem jeweiligen Schweißverfahren. Beim Elektroschweißen kann der Abstand geringer als beim Schweißen mit offener Flamme sein.

Bei der Abisolierung für Abzweigungen wird vorzugsweise mit Schnitten in Umfangsrichtung und mit Axialschnitten gearbeitet. Dann ergibt sich bei Teil-Abisolierungen beiderseits der Abzweigung je ein Schnitt in Umfangsrichtung und z.B. über und unter der Abzweigung je ein Axialschnitt.

Die Schnitte in Umfangsrichtung werden für Abzweigungen vorzugsweise wie die oben erläuterten und in Umfangsrichtung laufenden Schnitte als Schälschnitte durchgeführt. Lediglich in der Schnittlänge ergibt sich ein Unterschied. Bei den Abzweigungen entspricht die Schnittlänge der Länge der notwendigen Abisolierung in Umfangsrichtung. Die Schnitte besitzen einen Anfahrstrecke und eine Auslaufstrecke. In der Anfahrstrecke muß das verwendete Messer bis auf die gewünschte Schnitt-Tiefe in die Isolierung eindringen. In der Auslaufstrecke muß das Messer aus der Isolierung herausfahren.
Durch Verbindung der beiden Umfangsschnitte mit den Axialschnitten entsteht ein geschlossener Schnitt um die Abzweigung herum. Die Axialschnitte haben in der Anwendung auf die erfindungsgemäße Teil-Abisolierung an Abzweigungen vorzugsweise die gleiche Schälform wie die Schnitte in Umfangsrichtung.
Wie oben erläutert ist die Breite der Teil-Abisolierung bzw. die Länge der Teil-Abisolierung in Umfangsrichtung durch den notwendigen Abstand der Isolierung von der Schweißnaht bestimmt.

Die Schweißnaht liegt beim eingepaßten Abzweigungsrohr unmittelbar an dem Rohrmantel, so daß obige Maße zusätzlich durch den Durchmesser des Abzweigungsrohres bestimmt werden.
Die Schweißnaht liegt beim mittelbar mit einem Flansch angeschweißten Abzweigungsrohr am Außenrand des Flansches, so daß obige Maße zusätzlich durch die Flanschbreite und die Flanschlänge in Umfangsrichtung bestimmt werden.

Bei der Verbindung der Rohrleitung mit einer Abzweigung unter Erzeugung eines EP-Übergangsbereiches findet ein gestufter Ausschnitt statt. Am Ausschnitt ergibt sich um die Abzweigung eine äußere Ringfläche, die den EP-Übergangsbereich bildet. Innerhalb der äußeren Ringfläche besteht eine vollständig abisolierte innere Ringfläche

Günstig für die erfindungsgemäßen Schnitte ist eine Isolierungstemperatur von +5 Grad Celsius bis +50 Grad Celsius, vorzugsweise 20 bis 35 Grad Celsius.

Für die Schnitte in Umfangsrichtung kann an Rohrenden eine Vorrichtung Anwendung finden, wie sie in der EP 0213061 B1 beschrieben ist. Dabei läuft auf dem abzuisolierenden Rohrende in Umfangrichtung des Rohres ein Wagen, der sich mit Rollen auf der Isolierung abstützt und mit einem anstellbaren Messer versehen ist. Der Wagen wird im bzw. am Rohr geführt, so daß er nicht vom Rohr herunterfallen kann. Die Führung erfolgt mittels einer Kappe, mit der das Rohrende verschlossen ist, wobei die Kappe mittig mit einer Öffnung versehen ist, in der die Vorrichtung gehalten ist.

Für die Schnitte in Umfangsrichtung an Abzweigungen, bei denen die Rohrleitung zur Einfügung eines T-Stückes unterbrochen wird, kann die gleiche Vorrichtung Anwendung finden wie an den Rohrenden, weil durch die Unterbrechung Rohrenden entstehen, welche wie die üblichen Rohrenden mit einer Kappe versehen werden können.

Bei anderen Abisolierungen ohne Unterbrechung der Rohrleitung kann eine Vorrichtung Anwendung finden, wie sie gleichfalls in der EP 0213061 B1 beschrieben ist. Dabei läuft die Vorrichtung mit Rollen in Umfangsrichtung auf dem Rohr. Anders als bei dem Abisolieren am Rohrende kann die Vorrichtung aber nicht im Rohr gehalten werden. Damit die Vorrichtung bei der Bewegung in Umfangsrichtung um das Rohr gleichwohl Halt findet, ist diametral gegenüber liegend zur oben beschriebenen Rollenanordnung mindestens noch eine weitere Rolle vorgesehen. Von den beschriebenen Rollen ist mindestens eine Rolle anstellbar. Die Anstellung hat verschiedene Vorteile. Ein Vorteil ist die mögliche Anpassung der Vorrichtung an verschiedene Rohrdurchmesser. Ein weiterer Vorteil ist die Sicherung eines vorteilhaften Anpreßdruckes der Rollen an dem Rohr. Ein dritter Vorteil ist die Sicherung eines ausreichenden Bewegungsspieles der Rollen auf dem Rohr.

Wie oben beschrieben, kann das Messer eine Schneide besitzen, welche der Kontur der einzuschneidenden Nut angepaßt ist. Wahlweise kann das Messer auch verstellbar sein. Die Verstellbarkeit kann die Nuttiefe oder die Nutbreite betreffen. Die Verstellbarkeit kann z.B. auch dazu dienen, zwei Mal unter unterschiedlichen Winkeln in die Isolierung zu schneiden, so daß eine V-förmige Nut entsteht. Zusammen mit einer möglichen Auswechselbarkeit ergibt sich ein große Variationsbreite für den Schnitt.

Für den Axialschnitt wird vorzugsweise gleichfalls eine Vorrichtung mit anstellbarem Messer und mit einem Distanzhalter bzw. Schnitt-Tiefen-Begrenzung eingesetzt. Anders als beim Schneiden in Umfangsrichtung kann das Messer beim Axialschneiden wegen der Schnitt-Tiefen-Begrenzung zumindest nach geringer Übung auch allein von Hand auf dem Rohr geführt werden.

Anstelle der oben beschriebenen PE-Schicht kann nach der Erfindung auch ein anderer thermoplastischer Kunststoff wie LDPE (PE geringer Dichte) oder MDPE (PE mittlerer Dichte) oder HDPE (PE hoher Dichte) oder PP (Polypropylen) Anwendung finden. Anstelle von EP kann auch ein anderer Haftvermittler Anwendung finden.

In der Zeichnung sind verschiedene Ausführungsbeispiele der Erfindung dargestellt.
Fig. 1 zeigt die Verbindung schematischer Verbindung zweier Rohrenden für eine Erdgasleitung.
Fig. 2 zeigt eine Abzweigung großen Durchmessers von einer Erdgasleitung
Fig. 3 zeigt eine Abzweigung kleinen Durchmessers von einer Erdgasleitung
Fig. 4 zeigt eine Vorrichtung für Umfangsschnitte an Abzweigungen.
Fig. 5 und 6 zeigen eine Vorrichtung für Axialschnitte an Rohrenden und Abzweigungen

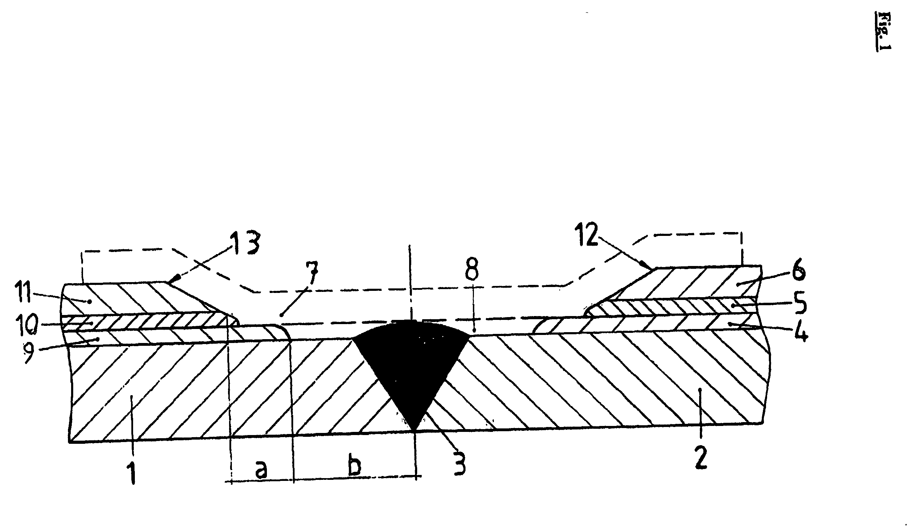

Nach Fig. 1 sind zwei Rohrenden 1 und 2 durch eine umlaufende Schweißnaht 3 miteinander verbunden. Von beiden Rohrenden 1 und 2 ist im Ausführungsbeispiel das Rohrende 2 werksseitig am Ende abisoliert. Das Rohrende 2 gehört zu Standardrohren, die mit gleicher Länge angeliefert worden sind. Dagegen gehört das Rohrende 1 zu einem Paßstück, das an der Baustelle von einem Standardrohr aus Stahl abgelängt worden ist. Beide Rohrenden 1 und 2 sind mit der gleichen Isolierung versehen. Die Isolierung ist dreischichtig aufgebaut.
Die eigentliche Isolierung wird durch eine außen liegende PE-Schicht 6 bzw. 11 gebildet. Die Haftung der PE-Schichten auf dem Stahl wird durch EP-Schichten 4 und 9 und Kleberschichten 5 und 10 bewirkt.
Die Isolierung beider Rohrenden ist bei 12 und 13 zunächst mit einem Schälschnitt bis unmittelbar an die EP-Schichten durchtrennt worden. Anschließend werden die abzuisolierenden PE-Schichten mit einem Axialschnitt in Rohrlängsrichtung durchtrennt und mit einer Heizeinrichtung auf 85 Grad Celsius erwärmt. Die Erwärmung erfolgt von außen mit einer Induktionsheizung.

Die erwärmte PE-Schicht läßt sich danach gut anziehen.

Die in Umfangsrichtung verlaufenden Schälschnitte haben eine schräg verlaufende Schnittkante verursacht, die im Tiefsten vor der EP-Schicht 4 bzw. 9 rund auslaufen, so daß die EP-Schichten unversehrt sind.
Der Abstand der Schnittkante 12 bzw. 13 zum Rohrende beträgt im Ausführungsbeispiel 150 mm. Die EP-Schichten erstrecken sich im Übergangsbereich über 1/3 dieser Länge, also bis auf 50 mm an die Rohrenden. Im Schweißbereich sind die Rohrenden vollständig abisoliert. Der Schweißbereich erstreckt sich über 100 mm.
Das heißt die Abisolierung erfolgt auf einem Drittel der Länge teilweise und beiderseits der Schweißnaht und über zwei Drittel beiderseits der Schweißnaht vollständig.
Nach dem Schweißen sind die Schweißnaht und die vorher vollständig abisolierten Bereiche gereinigt und mit EP-Pulver erneut beschichtet worden. Die neue Schicht ist mit 8 bezeichnet.

Über die so vorbereitete Verbindung der Rohrenden wird eine Schrumpfmuffe gezogen und anschließend wärmebehandelt, so daß es zum Schrumpf kommt und Muffe die strich-punktiert dargestellte Kontur 7 einnimmt.

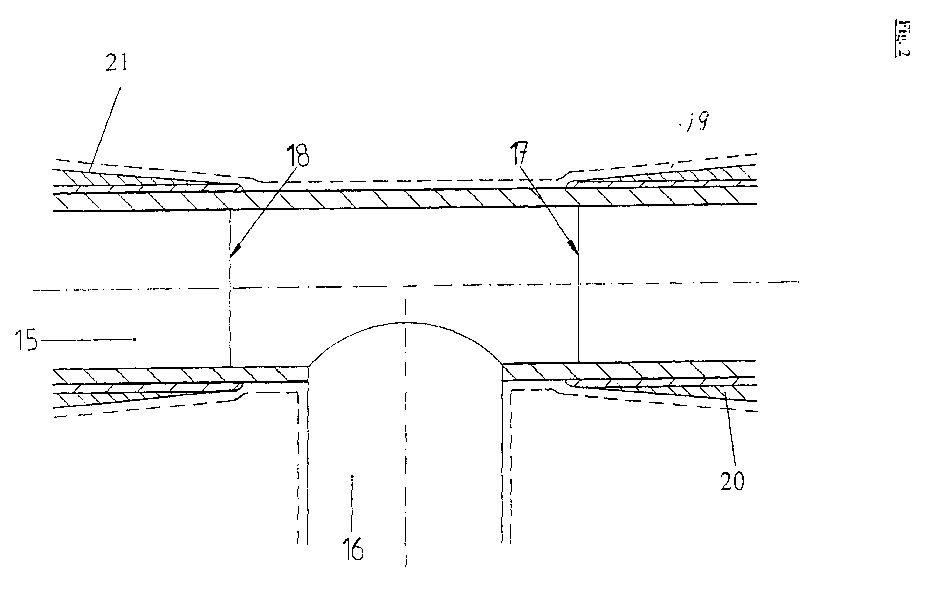

Fig. 2 zeigt ein Abzweigungs-Rohr 16 an der Erdgasleitung 15. Das Abzweigungs-Rohr 16 wird im Ausführungsbeispiel nach Verlegen der Erdgasleitung 15 verlegt und mit der Erdgasleitung 15 verbunden. Dabei ist die Erdgasleitung 15 zunächst abisoliert worden. Die Isolierung ist wie bei der Rohrleitung nach Fig. 1 aufgebaut. Die Abisolierung hat Schnittkanten 17 und 18 verursacht, welche umlaufend an der Leitung 15 verlaufen. Die beiden Isolierungsenden sind mit 20 und 21 bezeichnet.
Im Ausführungsbeispiel befinden sich die Schnittkanten 17 und 18 in einem Abstand von 150 mm vom Rohr 16. Von der Isolierung 20 und 21 ragen die EP-Schichten über die Schneidkanten 17 und 18 über 50 mm bis auf 100 mm an das Abzweigungsrohr 16 heran.
In dem restlichen Bereich von 100 mm hat eine vollständige Abisolierung stattgefunden.
Das Abzweigungs-Rohr 16 ist an der Schweißstelle mit der Erdgasleitung 15 deren Außenform angepaßt. Dadurch ergibt sich ein kurvenförmiger Verlauf der Schweißnaht auf dem Mantel der Ergasleitung 15.
Nach dem Schweißen sind der vorher vollständig abisolierte Bereich und die Schweißnaht gereinigt und mit einer neuen EP-Schicht versehen worden.
Die Abzweigung wird anschließend von einer strich-punktiert dargestellten Schrumpfmuffe eingeschlossen.
Die Handhabung der Schrumpfmuffe erfolgt, wie in der älteren deutschen Anmeldung 10318474 beschrieben.

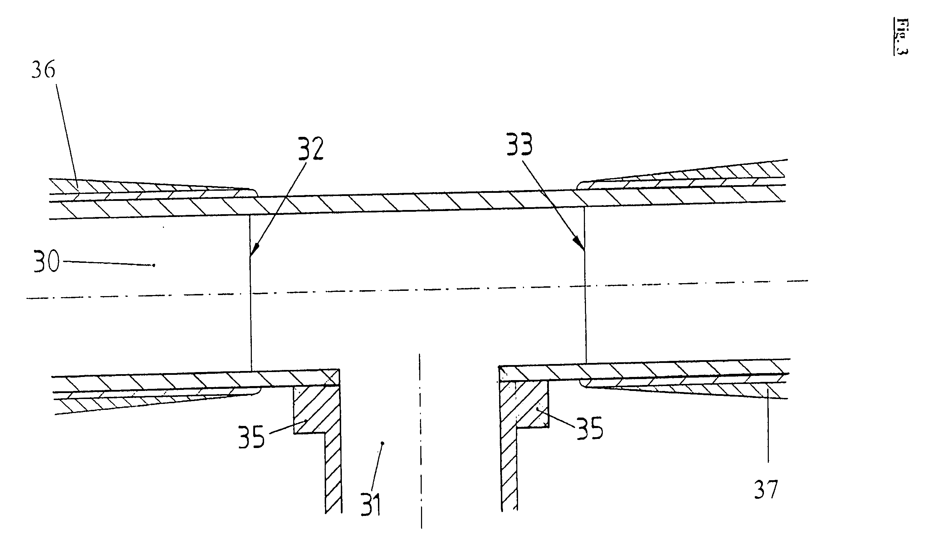

Fig. 3 zeigt wie Fig. 2 ein Abzweigungsrohr 31 an der Erdgasleitung 30. Unterschiedlich ist hierbei die Verbindung, welche mit einem Flansch 35 realisiert wird. Die Positionsnummern 32 und 33 bezeichnen Umfangsschnitte wie die Positionsnummer 17 und 18. Die Positionsnummern 36 und 37 bezeichnen Isolierungsenden wie die Positionsnummern 20 und 21 in der Fig. 2. Die Bearbeitung erfolgt wie im Ausführungsbeispiel nach Fig. 2.
Das Abzweigungs-Rohr 31 wird wie das Rohr 16 angeschweißt.
Es erfolgt eine Reinigung und Neubeschichtung mit EP sowie eine Muffenschrumpfung wie nach Fig. 2.

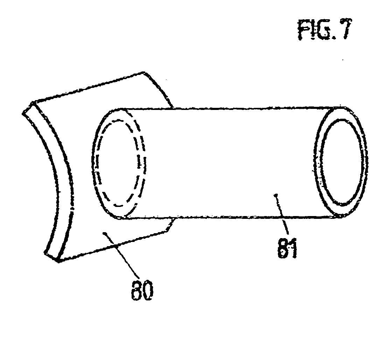

Das Ausführungsbeispiel nach Fig. 7 unterscheidet sich von dem Ausführungsbeispiel nach Fig. 3 dadurch, daß das Abzweigungsrohr 81 nicht unmittelbar an der Abgasleitung sondern mittelbar über ein Blech 80 mit der Abgasleitung verschweißt ist. Das Blech 80 bildet einen Flansch. Obwohl das Blech 80 einen größeren Materialaufwand nach sich zieht, ergibt sich durch das Blech 80 bzw. durch den Flansch als mittelbare Verbindung eine wesentliche Vereinfachung der Fertigung, weil die werksseitige Vorbereitung des Abzweigungsrohres mit dem Blech 80 vergleichsweise geringen Aufwand verursacht.

Die Umfangsschnitte an Rohrenden erfolgen wahlweise mit Vorrichtungen, wie Sie in der EP 213061 B1 oder in dem deutschen Gebrauchsmuster 20304143 beschrieben sind.

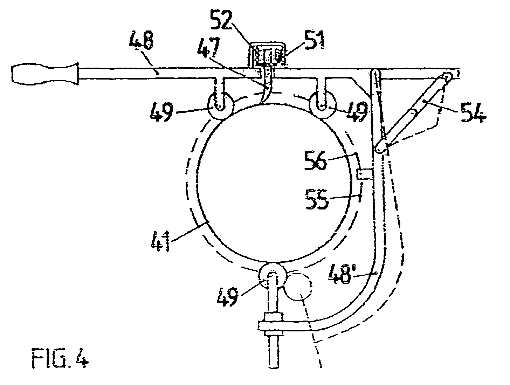

Für Umfangsschnitte an Abzweigung kann gemäß Fig. 4 ein Gerät aus der EP 213061 B1 in modifizierter Form Anwendung finden.
Die Scheidvorrichtung stützt sich über drei Laufräder 49 auf der Rohroberfläche ab. Die Laufräder 49 sind so angeordnet, daß die Schneidvorrichtung das Rohr umschließt. Zwei der Laufräder 49 sind an einem Vorrichtungsrahmen 48 befestigt. Das dritte Laufrad 48 läßt sich mit einer Verstellmechanik 48' gegen das Rohr anstellen und wieder von dem Rohr 41 lösen. Die Losstellung ist in Fig. 4 gestrichelt dargestellt. Die Betätigung der Verstellmechanik 48' erfolgt durch Kniehebel 54. Die Kniehebel 54 bilden zugleich eine Sicherung der Schneidvorrichtung gegen unbeabsichtigtes Lösen.
Zu der Schneidvorrichtung gehört noch ein Messer 47, daß in einer Führung 51 anstellbar gehalten ist und mit einer Drehkappe 52 verstellt wird.
Die Schneidvorrichtung weist noch einen Anschlag 55 auf, der eine genaue Schneidbewegung quer zur Rohrlängsachse sicherstellen soll. Der Anschlag 55 wirkt mit einer gestrichelt dargestellten Führung 56 zusammen, die auf dem Rohr 41 seitlich der Bewegungsbahn der Vorrichtung befestigt wird. Günstig für die Führung ist ein U-förmiges Querschnittsprofil, so daß der Anschlag 55 der Vorrichtung zwischen die beiden Schenkel der Führung greifen kann. Die Führung wird vor jedem Schnitt auf dem Rohr 41 positioniert.
In einem anderen Ausführungsbeispiel erfolgt die Führung dadurch, daß die Schneidvorrichtung in dem abzuisolierenden Bereich zugleich mit einem geraden bzw. scheibenförmigen Messer in die Isolierung dringt und dadurch gegen unerwünschte seitliche Verschiebung gesichert ist.

In einem weiteren, nicht dargestellten Ausführungsbeispiel ist eine Vorrichtung für Umfangsschnitte vorgesehen, mit der gleichzeitig zwei Schälschnitte ausgeführt werden können.

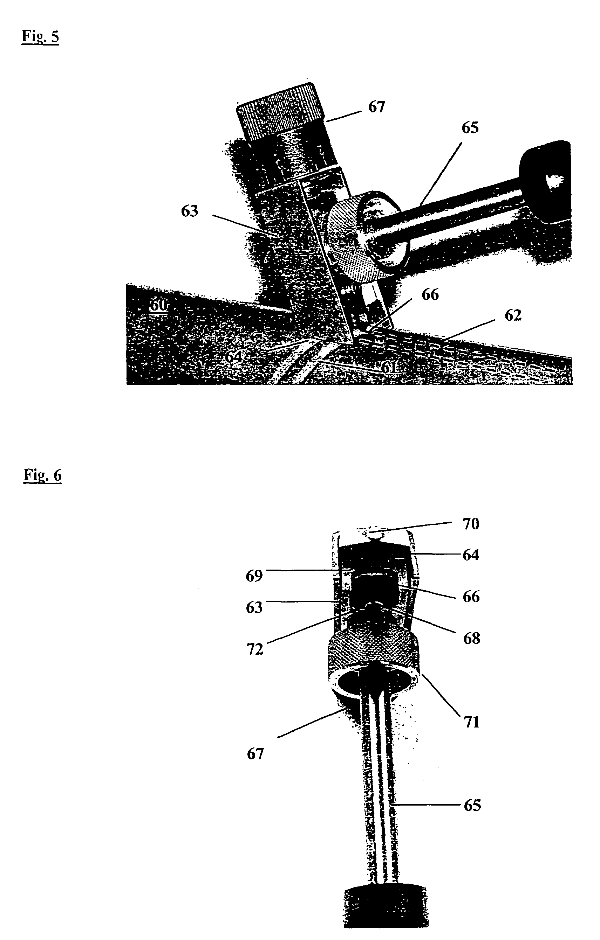

Nach Fig. 5 und 6 findet für die Axialschnitte eine Schneidvorrichtung Verwendung, die auch von Hand ohne Zwangsführung frei bewegt werden kann, so daß gerade Axialschnitte entstehen.
Die Schneidvorrichtung besitzt ein Schneidgehäuse 63, das während des Schneidvorganges mit Berührungsflächen 64 auf der Isolierung des Rohres 60 gleitet. In dem Gehäuse 63 ist ein Distanzstück 69 verstellbar angeordnet. Das Distanzstück soll während des Schneidvorganges mit einer Gleitfläche 70 auf der Isolierung des Rohres 60 gleiten. Bei unterschiedlichen Rohrdurchmessern wird die Verstellung des Distanzstückes 69 erforderlich, um dessen Gleitfunktion zu sichern.
Die Verstellung des Distanzstückes 69 erfolgt in der Weise, daß die Schneidvorrichtung auf dem Rohr aufgesetzt und das Distanzstück 69 mit der Isolierung in Berührung gebracht wird. Anschließend wird das Distanzstück arretiert.

Ferner gehört zur der Schneidvorrichtung ein verstellbares Messer 66. Das Messer ist an einem verschiebbaren Kulissenstein 72 mit einer Schraube 68 befestigt. Die Verstellung des Kulissensteins 72 erfolgt mit einer Verstellschraube 67. Außerdem sind an der Schneidvorrichtung zusätzlich nicht dargestellte Arretierungsschrauben vorgesehen, mit denen die verstellten Teile in der jeweiligen Stellung arretiert werden. Eine der Schrauben wird durch eine Griffstange 65 gebildet, die mit einem Gewindekopf in die Schneidvorrichtung greift. Durch Drehung der Griffstange wird das Messer und/oder das Distanzstück verspannt oder gelöst. Als Widerlager für die Verspannung dient ein Bund 71 auf der Zugstange.

Zum Ingangsetzen der Schneidvorrichtung wird diese in der in Fig. 5 dargestellten Form so auf das Rohr aufgesetzt, daß das Messer 66 in eine Nut 61 greift, die durch einen oben beschrieben Umfangsschnitt entstanden ist. Wenn danach an der Griffstange 65 gezogen wird, gräbt sich das Messer entlang den gestrichelten Linien durch die Isolierung.

## Patentansprüche

1. Verfahren zum Verbinden von Stahlrohren, insbesondere auch von Stahlrohrpaßstücken, zu einer Erdgasleitung sowie zur Herstellung von Abzweigungen von der Erdgasleitung,
a) wobei die Stahlrohre mit einer Isolierung versehen sind, die mehrschichtig aufgebaut ist, wobei als Schutzschicht ein thermoplastischer Kunststoff, insbesondere PE oder LDPE oder MDPE oder HDPE oder PP Anwendung findet und zur Haftung des Kunststoffes auf dem Stahlrohr ein Haftvermittler aus EP und vorzugsweise eine Kleberschicht aus einem PE-Copolymerisat zwischen dem Kunststoff und dem Stahlrohr vorgesehen ist,
b) wobei die Rohrenden der für die Erdgasleitung bestimmten Rohre zum Verschweißen im Bereich der Schweißstellen abisoliert werden oder
c) wobei in die Erdgasleitung für Abzweigungen T-förmige Anschlußstücke eingesetzt werden, wobei zum Einsetzen der T-förmigen Anschlußstücke Rohrstücke entsprechender Breite aus der Erdgasleitung herausgeschnitten werden und wobei die entstehenden Rohrenden zum Verschweißen mit den T-förmigen Anschlußstücken im Bereich der Schweißstellen abisoliert werden oder
d) wobei in die Erdgasleitung für Abzweigungen Rohre eingeschweißt werden, wobei für in das Rohr der Erdgasleitung eine Öffnung eingeschnitten wird, welche dem Durchmesser des Abzweigungrohres entspricht, und wobei das Abzweigungsrohr an dem zugehörigen Ende der Kontur der Öffnung in dem Rohr der Erdgasleitung angepaßt ist und wobei das
e) wobei an die Erdgasleitung für Abzweigungen Rohre angeschweißt werden, wobei in das Rohr der Erdgasleitung eine Öffnung mit der Öffnungsweite für die Abzweigung geschnitten wird und darauf ein Rohrstück der Abzweigung gesetzt wird, das mit einem Flansch vorgefertigt ist, der vorzugsweise aus einem der Mantelwölbung des Erdgasleitungsrohres angepaßten Blech besteht, welches mit dem Erdgasleitungsrohr verschweißt wird,
f) wobei das Abisolieren durch Einschneiden in die Isolierung und Abziehen der Isolierung erfolgt
g) wobei Umfangsschnitte und Axialschnitte in die Isolierung eingebracht werden
h) wobei die EP-Schicht zumindest bei Umfangsschnitten in die Isolierung unverletzt bleibt
i) wobei die verschweißten Rohrenden und die verschweißten Abzweigungen nachisoliert werden.

2. Verfahren nach Anspruch 1, **dadurch gekennzeichnet, daß**
a) bei der Isolierung der Rohre an den Rohrenden ein Bereich für die Verschweißung frei von Isolierung bleibt oder
b) die isolierten Rohre an den Rohrenden für die Verschweißung abisoliert werden oder
c) die isolierten Rohre an den Abzweigungen ganz abisoliert werden.

3. Verfahren nach Anspruch 1 oder 2, **dadurch gekennzeichnet, daß** die Umfangsschnitte an Rohrenden Schälschnitte sind und daß in die abzuziehende PE-Schicht mindestens noch ein Axialschnitt eingebracht wird.

4. Verfahren nach Anspruch 1 oder 2, **dadurch gekennzeichnet, daß** für Abzweigungen
a) beiderseits der Abzweigungen umlaufende Umfangsschnitte als Schälschnitte in die Isolierung eingebracht werden und zwischen den beiden Umfangsschnitten in die abzuziehende PE-Schicht mindestens noch ein Axialschnitt eingebracht wird
b) oder beiderseits der Abzweigungen Umfangsschnitte als Schälschnitte eingebracht werden, die über einen Umfangswinkel verlaufen, der kleiner 180 Grad ist, wobei die Umfangsschnitte durch Axialschnitte als Schälschnitte miteinander verbunden werden, welche die Abzweigung zwischen sich einschließen, so daß sich um die Abzweigung eine ringförmige Abisolierung ergibt.

5. Verfahren nach Anspruch 4, **dadurch gekennzeichnet, daß** die beiden Schälschnitte gleichzeitig eingebracht werden.

6. Verfahren nach einem der Ansprüche 1 bis 5, **dadurch gekennzeichnet, daß** das Abzweigungsrohr mittelbar über einen Flansch an die Erdgasleitung angeschweißt wird, wobei das Abzweigungsrohr mit dem Flansch werksseitig vorbereitet wird.

7. Verfahren nach Anspruch 6, **dadurch gekennzeichnet, daß** als Flansch ein Blech verwendet wird.

8. Verfahren nach einem der Ansprüche 1 bis 7 , **dadurch gekennzeichnet, daß** beim Abisolieren ein Übergangsbereich aus EP stehen gelassen wird.

9. Verfahren nach Anspruch 4 bis 8, **dadurch gekennzeichnet, daß**
a) der Bereich vollständiger Abisolierung an einem Rohrende eine Breite von mindestens 50mm hat oder
b) der Bereich vollständiger Abisolierung an einer Abzweigung mindestens eine ringförmige Fläche mit einer Breite von 50mm um die Abzweigung bildet oder
c) der Bereich vollständiger Abisolierung an einer Abzweigung mindestens eine ringförmige Fläche mit einer Breite von 70 mm um die Abzweigung bildet

10. Verfahren nach einem der Ansprüche 1 bis 9, **dadurch gekennzeichnet, daß** die Einschnitte bei einer Temperatur des Kunststoffs von 5 bis 50 Grad Celsius, vorzugsweise 20 bis 35 Grad Celsius erfolgt.

11. Verfahren nach einem der Ansprüche 1 bis 10, **dadurch gekennzeichnet, daß** die Isolierung zum Abziehen der PE-Schicht auf höchstens 110 Grad Celsius, vorzugsweise höchstens 80 Grad Celsius erwärmt wird.

12. Verfahren nach Anspruch 11, **dadurch gekennzeichnet, daß** die Erwärmung der Trennschicht
a) vom Rohrinnenmantel her erfolgt oder
b) vom Rohraußenmantel her erfolgt oder
c) von außen und von innen erfolgt

13. Verfahren nach Anspruch 11 oder 12, **dadurch gekennzeichnet, daß** die Isolierung zum Abziehen der PE-Schicht auf mindestens 50 Grad Celsius, vorzugsweise mindestens auf 70 Grad Celsius und noch weiter bevorzugt auf mindestens 80 Grad Celsius erwärmt wird.

14. Verfahren nach einem der Ansprüche 11 bis 13, **dadurch gekennzeichnet, daß** für die Erwärmung der Isolierung eine Wärmequelle verwendet wird,
a) deren Temperatur höchstens 250 Grad Celsius beträgt oder
b) deren Temperatur höchstens 150 Grad Celsius beträgt oder
c) der Temperatur unter dem Schmelzpunkt der PE-Schicht liegt

15. Verfahren nach einem der Ansprüche 11 bis 14, **dadurch gekennzeichnet, daß** die Erwärmung mittels einer temperaturgesteuerten Wärmequelle erfolgt.

16. Verfahren nach Anspruch 15, **dadurch gekennzeichnet, daß** eine Temperaturmeßstelle an der Isolierung festgelegt wird und die gemessene Temperatur zusammen mit dem Temperaturverlauf in der Isolierung als Regelgröße verwendet wird.

17. Verfahren nach Anspruch 16, **gekennzeichnet durch** Verwendung einer EDV-Steuerung

18. Verfahren nach einem oder mehreren der Ansprüche 11 bis 17, **gekennzeichnet durch** die Verwendung von gasförmigen oder flüssigen Heizmitteln oder von Heizstrahlern oder von induktiven Heizmitteln.

19. Verfahren nach Anspruch 18, **gekennzeichnet durch** die Verwendung von Heißlufterzeugern

20. Verfahren nach Anspruch 18 oder 19, **gekennzeichnet durch**
a) in Umfangsrichtung hin- und hergehend um die Gasleitung herumgeführte Heizeinrichtungen
b) **durch** eine Einhausung der zu erwärmenden Isolierungsflächen und Durchleitung von gasförmigen oder flüssigen Heizmitteln **durch** die Einhausung.

21. Verfahren nach Anspruch 20, **gekennzeichnet durch** Verwendung einer festen oder flexiblen, montierbaren und demontierbaren Einhausung der zu erwärmenden Flächen

22. Verfahren nach einem der Ansprüche 1 bis 21, **dadurch gekennzeichnet, daß** die vorgesehene Schneideinrichtung bei einem Umfangsschnitt über 360 Grad in einem Eintrittsbereich auf die gewünschte Schnitt-Tiefe in der Isolierung gebracht und umlaufend um das Rohr geführt wird

23. Verfahren nach einem der Ansprüche 1 bis 22, **dadurch gekennzeichnet, daß** gleichzeitig zwei Umfangsschnitte beiderseits der Abzweigung in die Isolierung der Erdgasleitung eingebracht werden.

24. Verfahren nach einem der Ansprüche 1 bis 23, **dadurch gekennzeichnet, daß** die abisolierten Rohrsstelle und/oder Schweißstellen für die Nachisolierung gereinigt werden und anschließend mit einer Schrumpfmuffe versehen werden, welche die Isolierungsenden übergreift.

25. Verfahren nach Anspruch 24, **dadurch gekennzeichnet, daß** die Reinigung durch Stahlstrahlen erfolgt.

26. Verfahren nach Anspruch 25, **gekennzeichnet durch** eine Einhausung der Reinigungsflächen an der Erdgasleitung.

27. Verfahren nach einem der Ansprüche 1 bis 26, **dadurch gekennzeichnet, daß** der vollständig abisolierte Bereich, vorzugsweise auch die Schweißstelle, vor Anbringung der Schrumpfmuffe mit EP beschichtet wird.

28. Verfahren nach einem der Ansprüche 1 bis 27, **dadurch gekennzeichnet, daß**
a) bei Anwendung einer Schrumpfmuffe zum Nachisolieren von miteinander zu verschweißenden Rohrleitungen, die Schrumpfmuffe zunächst auf ein Rohrende aufgeschoben wird und nach dem Verschweißen und Reinigen Verwendung eines T-Stückes für eine Abzweigung über die Schweißstelle geschoben wird.
b) bei Anwendung einer Schrumpfmuffe zum Nachisolieren einer mit einem T-Stück hergestellten Abzweigung die Schrumpfmuffe vor dem Einschweißen des T-Stückes über das T-Stück gezogen wird und daß bei dem Einsetzen des T-Stückes in die Rohrleitungslücke und Verschweißen des T-Stückes die vorragenden und zur Überlappung der Schweißstellen bestimmten Muffenteile zurückgezogen werden

29. Verfahren nach einem der Ansprüche 1 bis 28, **dadurch gekennzeichnet, daß** für die Schnitte in Umfangsrichtung ein Werkzeug verwendet wird, das sich mit Stützrollen auf dem Rohrmantel abstützt.

30. Verfahren nach Anspruch 29, **dadurch gekennzeichnet, daß** die Schneidvorrichtung während der Umfangsschnitte an Rohrenden mit einem Dom in einer zentrischen Öffnung eine Kappe oder Deckel am Rohrende geführt ist.

31. Verfahren nach Anspruch 29, **dadurch gekennzeichnet, daß** die Schneidvorrichtung für Umfangsschnitte an Abzweigungen dem Bereich der Stützrollen gegenüberliegend an dem Rohr eine weitere Rolle zur Halterung des Werkzeuges besitzt.

32. Verfahren nach Anspruch 31, **dadurch gekennzeichnet, daß** die Schneidvorrichtung in axialer Richtung des Rohres geführt wird.

33. Verfahren nach Anspruch 32, **gekennzeichnet durch** die Verwendung
a) flachen Messern oder scheibenförmigen Messern als Führung, wobei die Messer in die abzuziehende Isolierung schneiden und der Vorrichtung seitlichen Halt geben.
b) von Führungen, die auf der Erdgasleitung lösbar montiert werden

34. Verfahren nach einem der Ansprüche 1 bis 33, **gekennzeichnet durch** Schneidvorrichtungen für den Umfangsschnitt mit einstellbarem Messer.

35. Verfahren nach einem der Ansprüche 1 bis 34, **gekennzeichnet durch** die Verwendung einer Axialschneidvorrichtung mit einstellbarem Messer und einer Distanzeinrichtung bzw. Schnitt-Tiefsten-Einstellung.

36. Verfahren nach Anspruch 35, **gekennzeichnet durch** die Verwendung einer Vorrichtung mit einem Gehäuse
a) mit einer Messerführung für die Messerverstellung
b) mit einer verstellbaren Distanzeinrichtung

37. Verfahren nach einem der Ansprüche 34 bis 36, **gekennzeichnet durch** die Verwendung einer Vorrichtung mit einer Messerarretierung und/oder einer Arretierung für die Distanzeinrichtung.

38. Verfahren nach Anspruch 14, **dadurch gekennzeichnet, daß** die Schnitte schräg zur Radialen verlaufen.

39. Verfahren nach Anspruch 1, durch gekennzeichnet, daß die EP-Schicht eine Dicke von 0,04 bis 0,05 mm hat.
